# EUROPEAN PATENT APPLICATION

(11) **EP 3 819 760 A1**
(43) Date of publication of application: **12.05.2021**
(21) Application number: 19213976.4
(22) Date of filing: 05.12.2019
(51) Int. Cl.: G06F 9/445, G06F 9/451, G06F 3/0482, G06Q 30/00, G06F 8/38, G06F 8/71, G06F 8/76

(54) **METHODS AND APPARATUS FOR GENERATING A PLATFORM-AGNOSTIC MOBILE APPLICATION CONFIGURATION DATA STRUCTURE WITH A DYNAMIC QUIZ**

(30) Priority: 06.11.2019 US 201916676221
(71) Applicant: PredictSpring, Inc., Los Altos, CA 94022 (US)
(72) Inventor: GARIMELLA, Sandilya, San Jose, California 95120 (US); MANGTANI, Nitin, Los Altos, California 94022 (US); CHADALAWADA, Viswanth, San Jose, California 95134 (US)
(74) Representative: Ellens, Andries

(57) **Abstract**

A non-transitory processor-readable medium storing code representing instructions to be executed by a processor. The code causes the processor to send a signal to a compute device such that a first graphical user interface is rendered at the compute device via a dynamic form builder. The code causes the processor to receive, via the first graphical user interface, a set of inputs associated with a set of questions and a set of layout settings. The code causes the processor to generate, based on the set of inputs, a platform-agnostic configuration application data structure. The code causes the processor to send the platform-agnostic configuration application data structure to an application on a mobile device, causing the mobile device to render a second graphical user interface. The second graphical user interface includes a dynamic form configured to receive at least one response to a question from the set of questions.

## Description

### Related Application

This application claims priority to U.S. Application No. 16/676,221, filed on November 6, 2019, entitled "Methods And Apparatus For Generating A Platform-Agnostic Mobile Application Configuration Data Structure With A Dynamic Quiz", which is related to U.S. Application No. 14/601,847, filed on January 21, 2015, entitled "Methods and Apparatuses for Dynamically Generating Mobile Application Layouts Using Client-Independent Configuration," each of which is incorporated herein by reference in its entirety.

### Background

The embodiments described herein relate generally to generating a mobile application and more particularly to methods and apparatus for generating a platform-agnostic mobile application configuration data structure with a dynamic quiz.

A mobile application (or mobile app) is an application program designed to run on mobile devices such as smartphones, tablet computers, portable computers, personal digital assistants (PDA's), and/or the like. A mobile application is designed to enable the user of the mobile device to perform specific tasks (e.g., exchanging information, buying or selling products, /or other such actions.) A mobile application can be designed and/or associated with a specific client and provide personalized experience to the user. Such client-specific mobile applications often require mobile application developers to update or write the client-specific code when changes to the mobile applications are to be made. This can be time-consuming and costly for the clients and the mobile application developers. Additionally, updating the code for a mobile application can involve submitting the updated code to a mobile application publisher for review and approval, which can add additional cost and additional time to the development schedule.

Accordingly, a need exists for dynamically generating and updating client-specific mobile applications and providing personalized experience to the users of the mobile devices.

### Summary

Embodiments described herein include a non-transitory processor-readable medium storing code representing instructions to be executed by a processor. The code comprises code to cause the processor to send a signal to a compute device such that a first graphical user interface is rendered at the compute device via a dynamic form builder. The code further comprises code to cause the processor to receive, via the first graphical user interface, a set of inputs associated with a set of questions and a set of layout settings. The code comprises code to cause the processor to generate, based on the set of inputs, a platform-agnostic configuration application data structure. The platform-agnostic configuration application data structure includes (1) platform-agnostic mobile application quiz data associated with the set of questions, and (2) platform-agnostic mobile application layout settings data associated with the set of layout settings. The code comprises code to cause the processor to send the platform-agnostic configuration application data structure to an application on a mobile device, causing the mobile device to render a second graphical user interface on a display of the mobile device based on the platform-agnostic mobile application quiz data and the platform-agnostic mobile application layout settings data. The second graphical user interface includes a dynamic form configured to receive at least one response to a question from the set of questions.

### Brief Description of the Drawings

The drawings are not necessarily to scale; in some instances, various aspects of the disclosure herein may be shown exaggerated or enlarged in the drawings to facilitate an understanding of different features. In the drawings, like reference characters generally refer to like features (e.g., functionally similar and/or structurally similar elements).
FIG. 1 is a schematic diagram illustrating a mobile device, a content management builder, and a content management server, according to an embodiment.
FIG. 2 is a schematic diagram illustrating a mobile configuration file, according to an embodiment.
FIG. 3 is a flow chart illustrating a process of creating a platform-agnostic mobile application configuration data structure, according to an embodiment.
FIG. 4 is a flow chart illustrating a process of creating a platform-agnostic mobile application configuration data structure, according to an embodiment.
FIGS. 5A-5G show exemplary screenshots of the first graphical user interfaces at a content management builder, according to an embodiment.
FIGS. 6A-6C show exemplary screenshots of the second graphical user interface at the mobile device, according to an embodiment.

### Detailed Description

Embodiments described herein include a non-transitory processor-readable medium storing code representing instructions to be executed by a processor. The code comprises code to cause the processor to send a signal to a compute device such that a first graphical user interface is rendered at the compute device via a dynamic form builder. The code further comprises code to cause the processor to receive, via the first graphical user interface, a set of inputs associated with a set of questions and a set of layout settings. The code comprises code to cause the processor to generate, based on the set of inputs, a platform-agnostic configuration application data structure. The platform-agnostic configuration application data structure includes (1) platform-agnostic mobile application quiz data associated with the set of questions, and (2) platform-agnostic mobile application layout settings data associated with the set of layout settings. The code comprises code to cause the processor to send the platform-agnostic configuration application data structure to an application on a mobile device, causing the mobile device to render a second graphical user interface on a display of the mobile device based on the platform-agnostic mobile application quiz data and the platform-agnostic mobile application layout settings data. The second graphical user interface includes a dynamic form configured to receive at least one response to a question from the set of questions.

As used in this specification, the singular forms "a," "an" and "the" include plural referents unless the context clearly dictates otherwise. Thus, for example, the term "a question" is intended to mean a single question or multiple questions. For another example, the term "a layout setting" is intended to mean a single layout setting or multiple layout settings.

### Mobile Applications and Mobile Devices

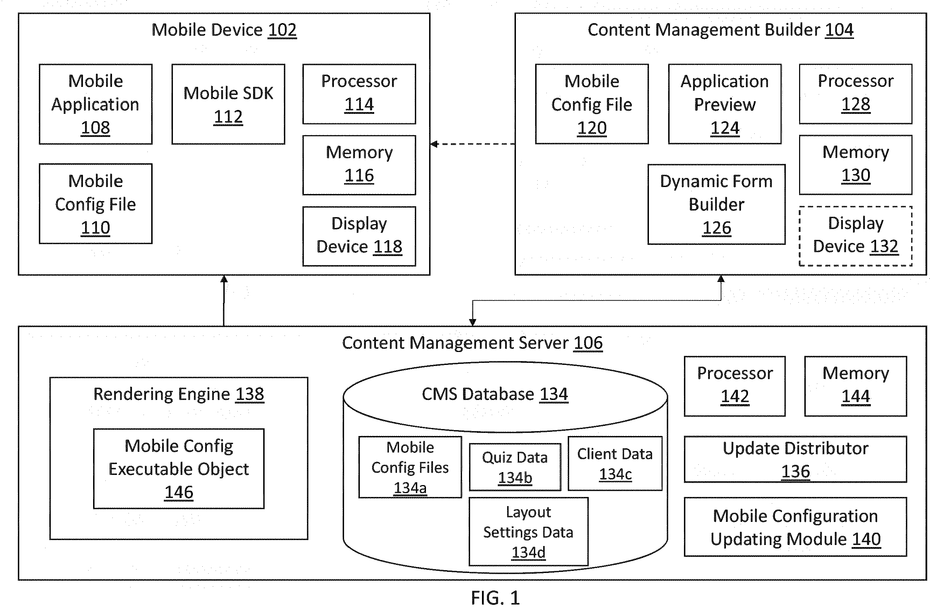

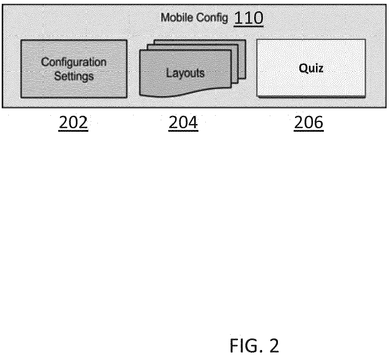

FIG. 1 is a schematic diagram illustrating a mobile device 102, a content management builder 104, and a content management server 106. For example, in some implementations, the mobile device 102 can be a physical hardware device including at least one memory 116, at least one processor 114, and at least one display device 118 (e.g., a liquid-crystal (LCD) display screen, and/or a similar display device). The mobile device 102 can be a personal computer (e.g., a laptop, and/or a like personal computing device), a mobile device (e.g., a smartphone and/or similar mobile phone device (e.g., running an Operating System such as, but not limited to, iOS, Android, Windows Phone 8, Blackberry OS, and/or similar Operating Systems)), a tablet, a personal digital assistant (PDA), wearable devices (e.g., smart watches, augmented reality vision devices, and/or similar devices), and/or a similar mobile device), and/or a similar device. The mobile device 102 can install a mobile application 108, e.g., from a vendor and/or a similar developer. The mobile device 102 can also store mobile configuration files 110 (described in more detail in FIG. 2) and a form of a mobile software development kit (mobile SDK) 112.

The at least one memory 116 can be, for example, non-volatile memory, volatile memory, memory local to a server or networked, virtualized memory, a random-access memory (RAM) (e.g., a dynamic RAM, a static RAM), a flash memory, a removable memory, and/or so forth. In some embodiments, the memory 116 can store, for example, the mobile application 108, the mobile SDK 112, the mobile configuration file 110, a database(s), process(es), application(s), virtual machine(s), instructions, and/or other software modules (stored and/or executing in hardware).

The at least one processor 114 can be any hardware module and/or component configured to receive and process data, and/or to execute code representing instructions. In some embodiments, the at least one processor 114 can be a general purpose processor, a Field Programmable Gate Array (FPGA), an Application Specific Integrated Circuit (ASIC), a Digital Signal Processor (DSP), and/or the like. The at least one processor 114 can implement a number of modules and/or components. The at least one processor 114 can be configured to execute instructions generated by any of its modules, and/or instructions stored in the memory 116, for example, the mobile application 108, the mobile configuration file 110, and the mobile SDK 112.

The mobile application 108 can allow a user operating the mobile device 102 to, for example, view a mobile store and/or catalogue interface for a client's products, to purchase and/or view products offered by the client, and/or to access information associated with a client. The client can be, for example, a merchant, a health care service provider, a travel agent, and/or other third-parties. The mobile application 108 can include content (e.g., a set of questions included in a dynamic form) designed to solicit answers to questions personalized to the user operating the mobile device 102. Such features can be defined using the content management builder 104 and can be configured to work on a number of device operating systems and/or mobile platforms (including but not limited to Android platform, iOS, Windows Phone, and/or like platforms).

The mobile application 108 can process the mobile configuration file 110 to determine how to present and organize data within the mobile application 108 and/or to determine particular features and/or content (e.g., questions included in a dynamic form) to include within the mobile application 108. For example, the mobile configuration file 110 can contain a set of questions in a dynamic form, layout information (e.g., color information, font family and font size information, and/or similar information), and/or can contain feature flags corresponding to particular features (e.g., a shopping cart, a search feature, and/or similar features) that the mobile application may implement. The mobile configuration file 110 can also be referred to as a configuration application data structure, a mobile application configuration file, or a platform-agnostic configuration application data structure. The mobile configuration file 110 can be platform-agnostic (e.g., the mobile configuration can be used by applications running on multiple mobile platforms (e.g., iOS, Android, BlackBerry OS, Windows Phone, and/or the like), and does not require translation or alternative formats between mobile platforms). The mobile configuration file is described further in at least FIG. 2.

The mobile application 108 can also use the mobile SDK 112 in conjunction with the mobile configuration file 110 to determine how to render and/or otherwise implement features as well as mobile application layout within the mobile application 108. The mobile SDK 112 can include, for example, information on how to implement features for each particular operating system and/or mobile platform, how to implement features specified in the mobile configuration file 110, and/or other information. In some implementations, for example, the mobile application 108 can use the mobile SDK 112 to define a nested tree data structure from the mobile configuration file 110, such that the mobile application 108 can determine more quickly how particular components of the mobile application features and/or layout should be rendered. The mobile application 108 can then traverse the nested tree data structure when the mobile application 108 is rendering a particular mobile application page, find the relevant layout data, and render the page according to the features and layout information in the mobile configuration file 110. In some implementations, the mobile application 108 can find the relevant feature data and/or layout data by using an action Uniform Resource Locator (URL) address, which can specify the particular node in the nested tree to access for rendering the mobile application page. The mobile application 108 can receive this action URL from the content management server 106, e.g., when a user interacts with the mobile application 108 such that a new mobile application page is loaded.

### Content Management Builder and Content Management Server

The mobile application content and layout may be defined by the content management builder 104. The content management builder 104 can, in some implementations, be a hardware component (e.g., a client and/or administrative device, including but not limited to a laptop and/or desktop personal computer, a server, and/or a mobile device such as a tablet, smartphone, PDA, and/or a similar device used by the client/developer) including at least one processor 128, at least one memory 130, and software (stored in memory 130 and/or executed by processor 128) that instructs the content management builder 104 to perform multiple functions (such as creating, modifying, and/or editing mobile applications, and/or related functions). The content management builder 104 can, in other implementations, be a software program stored at a client's server, a service provided by the content management server 106 and accessible by the client via a network, and/or a combination of a software program stored at the client's server and a service accessible via the network. The client can be, for example, a merchant, a health care service provider, a travel agent, and/or other third-parties that communicate with the content management server 106 to provide customized mobile applications for its customers operating mobile devices 102.

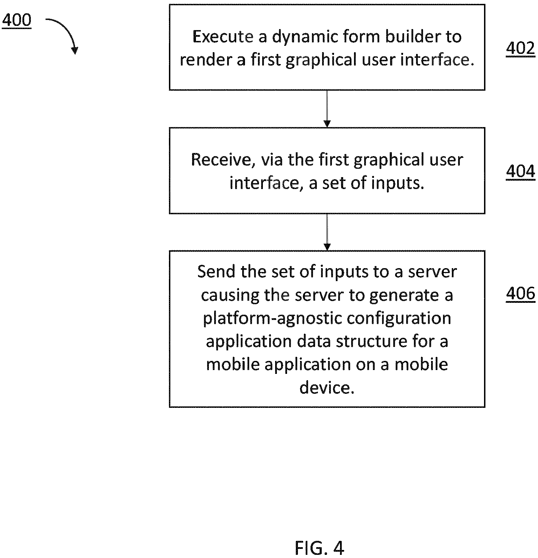

The at least one processor 128 can be any hardware module and/or component configured to receive and process data, and/or to execute code representing instructions. In some embodiments, the at least one processor 128 can be a general purpose processor, a Field Programmable Gate Array (FPGA), an Application Specific Integrated Circuit (ASIC), a Digital Signal Processor (DSP), and/or the like. The at least one processor 128 can implement a number of modules and/or server components. The at least one processor 128 can be configured to execute instructions generated by any of its modules and/or server components, and/or instructions stored in the memory 130, for example, the process of creating a platform-agnostic mobile application configuration data structure (as shown and discussed with regards to FIG. 4). In some implementations, if the at least one processor 128 includes multiple processors, the modules and/or server components can be distributed among and/or executed by the multiple processors. The at least one memory 130 can be configured to store processor-readable instructions that are accessible and executable by the processor 128.

The at least one memory 130 can be, for example, non-volatile memory, volatile memory, memory local to a server or networked, virtualized memory, a random-access memory (RAM) (e.g., a dynamic RAM, a static RAM), a flash memory, a removable memory, and/or so forth. In some implementations, the memory 130 can store, for example, the mobile configuration file 120, instructions to execute the application preview 124, instructions for executing the dynamic form builder 126, a database(s), process(es), application(s), virtual machine(s), instructions, and/or other hardware modules or software modules (stored and/or executing in hardware) configured to execute the process of creating a platform-agnostic mobile application configuration data structure (as shown and discussed with respect to FIG. 4.) In such implementations, instructions for executing the process of creating a platform-agnostic mobile application configuration data structure, and/or any associated methods can be stored within the memory 130 and executed at the processor 128.

The content management builder 104 can also optionally include a display device 132, e.g., for viewing previews of mobile application layouts being developed at the content management builder 104. The content management builder 104 can also, in other implementations, be a software component, e.g., hosted on a server (e.g., such as the content management server 106) and/or installed on a developer computing device (not shown) configured to perform the above functions. The content management builder 104 can also have access to mobile configuration file 120 corresponding to mobile application content and layout being defined and/or updated within the content management builder 104. The content management builder 104 can also include a mobile application preview window 124, which can facilitate previews of layouts and/or content that a developer elects to include in the mobile application 108.

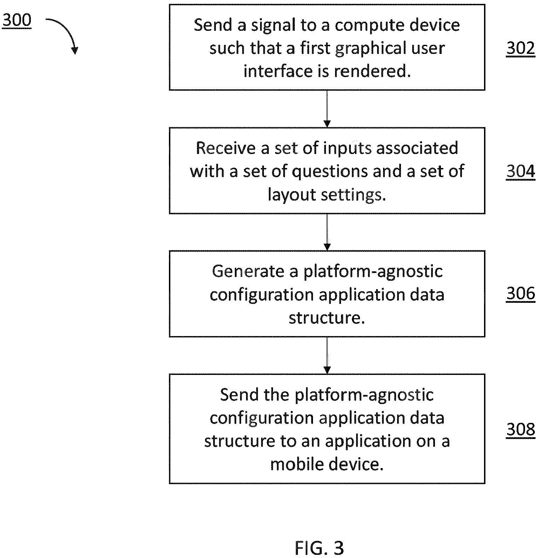

Developers may define mobile application content and layouts within the content management builder 104 via a dynamic form builder 126. The dynamic form builder 126 may be a software package configured to be executed to render a graphical user interface and may include textual editing tools, image editing tools, multi-media editing tools, a drag-and-drop interface, and/or the like. The drag-and-drop interface may allow developers to drag application feature blocks into an application editor portion of the dynamic form builder 126. The content management builder 104 can use the application feature blocks and/or various editing tools to determine the mobile application content and layout, and/or can inform the content management server 106 how to define, modify, and/or update a mobile application including the mobile application content and layout. Further details for the content management builder 104 are described in at least FIGS. 3-4.

The content management builder 104 can interact with a content management server 106 to define, modify, and/or update mobile application content and layouts. The content management server 106 can be implemented as a single server or a cluster of servers. In some implementations, the content management server 106 can be hosted at a cloud data storage network. The content management server 106 can include at least one processor 142, at least one memory 144, and at least one content management system (CMS) database 134 (optionally stored in memory 144).

The at least one processor 142 can be any hardware module and/or component configured to receive and process data, and/or to execute code representing instructions. In some embodiments, the at least one processor 142 can be a general purpose processor, a Field Programmable Gate Array (FPGA), an Application Specific Integrated Circuit (ASIC), a Digital Signal Processor (DSP), and/or the like. The at least one processor 142 can implement a number of modules and/or server components. The at least one processor 142 can be configured to execute instructions generated by any of its modules and/or server components, and/or instructions stored in the memory 144, for example, the process of creating a platform-agnostic mobile application configuration data structure (as shown and discussed with regards to FIG. 3). In some implementations, if the at least one processor 142 includes multiple processors, the modules and/or server components can be distributed among and/or executed by the multiple processors. The at least one memory 144 can be configured to store processor-readable instructions that are accessible and executable by the processor 142.

The at least one memory 144 can be, for example, non-volatile memory, volatile memory, memory local to a server or networked, virtualized memory, a random-access memory (RAM) (e.g., a dynamic RAM, a static RAM), a flash memory, a removable memory, and/or so forth. In some implementations, the memory 144 can store, for example, a database(s) (e.g., CMS database 134), process(es), application(s), virtual machine(s), instructions, and/or other hardware modules or software modules (stored and/or executing in hardware) configured to execute the process of creating a platform-agnostic mobile application configuration data structure (as shown and discuss with respect to FIG. 3.) In such implementations, instructions for executing the process of creating a platform-agnostic mobile application configuration data structure, and/or any associated methods can be stored within the memory 144 and executed at the processor 142.

The CMS database 134 can include records for mobile configuration files records 134a, quiz data records134b, client data records 134c, and layout settings data records 134d. The mobile configuration files records 134a can include, for example, records of past and/or recent mobile configuration files that have been defined by the content management builder 104. The quiz data records 134b can include, for example, records of questions designed to solicit answers personalized to the user and/or answer choices to the questions within the mobile application 108. The client data records 134c can include, for example, records of clients (e.g., merchants and/or other developers) who have developed mobile application content and/or layouts using the content management builder 104. The layout settings data records 134d can include, for example, records of layouts included in a mobile configuration file. The CMS database 134 can also include, for example, the configuration settings records (not shown in FIG. 1; e.g., the mobile configuration data structure) which include, for example, records of features and/or color settings specified by a developer for the mobile application 108.

The content management server 106 can also include a rendering engine 138, a mobile configuration updating module 140, and an update distributor 136. The rendering engine 138 can be configured to help define mobile application content and layouts based on data from the content management builder 104. The rendering engine 138 can generate an executable object (e.g., in Java for an Android operating system at mobile devices or Swift for an iOS operating system at mobile devices) based on the mobile configuration files 134a and render the mobile application 108. The mobile configuration updating module 140 can be configured to update mobile configuration files stored in the CMS database 134, e.g., based on data received from the content management builder 104. The update distributor 136 can be configured to send updated mobile configuration files to mobile devices 102, which have the mobile application 108 corresponding to the mobile configuration files being distributed. Further details about the content management server 106 can be found in at least FIGS. 3-4.

### Mobile Configuration Files

FIG. 2 is a schematic diagram illustrating a mobile configuration file 110. In some implementations, a mobile configuration file 110 can include at least three components: a configurations settings component 202, a set of layout data structures 204, and a quiz data component 206. A mobile configuration file 110 can be stored in the mobile configuration file table 134a of the CMS database 134. Configurations settings component 202 can also be referred to as a layout settings executable object. The configuration settings component 202 can be stored in the configuration settings table (not shown in FIG. 1) of the CMS database 134, and can include appearance and/or feature settings for a mobile application 108. For example, the configurations settings component 202 can include font and text and/or background color settings, and/or flags for features such as a shopping cart and/or barcode scanning. Further feature flags can include but are not limited to: how often a mobile application 108 can check for an updated mobile configuration file, a feature for presenting more quiz questions, a feature for skipping a quiz question, a feature for taking a picture of a product and adding the product to a wishlist, notifications, initiating searches as the user completes a search query, search filters and search criteria, providing ratings and reviews for products, searching for audio files within the mobile application 108, using geofencing to show notifications and/or otherwise perform actions related to businesses within the location (e.g., providing a notification to the user when the user is near a store with seasonal discounts, automatically opening a mobile application 108 for a client when the user is near one of the client's stores, and/or similar actions), a store locator feature, a checkout shopping cart (and/or a location where the user can be redirected to select and purchase products on the mobile application 108), and/or currencies (including but not limited to physical currencies such as United States dollars or the Euro and digital currencies such as bitcoins).

Color settings can include, but are not limited to: colors for action bar backgrounds and action bar text (where action bars can be an upper portion of the mobile application 108, which allows the user to navigate, view a title for, and perform page-level actions on, a page within the mobile application 108), background and text colors for mobile application tabs, background colors and text colors for primary and secondary buttons within the mobile application 108, text color for quiz questions and answer choices, text color for list prices for products shown in the mobile application 108, and/or text color for sales prices shown in the mobile application 108. Font settings can include, but are not limited to: default fonts, header fonts, and display text fonts for each platform for which a mobile application 108 can be installed.

Application layout features can include, but are not limited to: an identifier for a layout to be shown when a search query does not have any results (e.g., a layout for a list of related products and/or related sales), whether search results are shown as a grid or a list, the dimensions of the grid in which search results are shown, if the grid option is selected, whether or not a wish list is activated (e.g., as a tab, as an option in a mobile application's "More" menu, and/or as an option in an action bar), displaying text in the grid cells of the layout, if the search results are displayed in a grid, whether the action bar should have a light or dark background (and/or whether the action bar icons should be dark or light, respectively), whether images should be scaled, cropped, and/or otherwise modified to fit within the layout, where a store locator option should be located, e.g., if the feature is activated (e.g., within a tab section, in a navigation bar for the mobile application 108, and/or the position in the tab section and/or in the navigation bar that the store locator option should inhabit, and/or other such information), the icon and/or title to be provided for the store locator option, if the option is activated, a location for a shopping cart in the mobile application 108 (e.g., in the navigation bar, in a tab section, and/or a similar location), a position in the tab section and/or the navigation bar for the shopping cart, an icon and/or title for the shopping cart option, and/or links to miscellaneous pages and/or data to be shown within the mobile application 108 (including but not limited to privacy policy, terms of service, and/or merchant contact information pages).

Tab feature settings can include, but are not limited to the position of a tab section (e.g., at the top, bottom, and/or side of the mobile application window), a title for the tab section, icons to use for the tab section, and/or other layout information to provide to the mobile application 108 for rendering the tab section.

The set of layout data structures 204 (also referred to as mobile application layout settings data or platform-agnostic mobile application layout settings data) can each specify layout settings in the mobile application 108. A layout data structure can specify at least some layout settings for a particular page and/or tab, including but not limited to an identifier for the layout data structure, an identifier for the particular merchant for which the mobile application 108 was developed, an identifier for a mobile configuration file and/or data structure associated with the layout, addresses for icons (e.g., for the tab, and/or for portions of the page), titles and/or other labels for the page, Operating System (OS) mapping settings for the layout (e.g., for what platform and/or OS the layout will be rendered), and/or positions of various components of the layout. Each tab and/or page within the mobile application 108 can have a corresponding layout data structure. Each layout data structure 204 can be implemented as an Extensible Markup Language (XML) and/or JSON data structure stored in the layout settings data record 134d of the CMS database 134.

The quiz data component 206 can include the quiz (including a set of questions and answer choices) that the client designs using the content management builder 104. For example, the quiz data component can include a client identifier, a quiz identifier, a title of the quiz, a timestamp of the creation date of the quiz, a timestamp of the last update date, a layout identifier, question identifiers, question texts, answer identifiers, answer types (e.g., text, single choice, multi choice), answer option texts, and/or similar quiz information. The mobile configuration file can include one or more quiz pages. Quiz data structures can be stored in the quiz data records 134b of the CMS database 134. An example quiz data structure 206 including at least some of the above information can be in a format of a user-fillable form. The mobile configuration file 120 at the content management builder 104 and the mobile configuration file 134a at the content management server 106 can include similar information as the mobile configuration file 110 discussed with regards to FIG. 2.

### Creating a Platform-Agnostic Mobile Application Configuration Data Structure with the Content Management Builder

FIG. 3 is a flow chart illustrating a process of creating a platform-agnostic mobile application configuration data structure, according to an embodiment. The process of creating a platform-agnostic mobile application configuration data structure 300 can be executed at, for example, a processor at a server such as the processor 142 at the content management server 106 shown and described with respect to FIG. 1. The server can include, for example, a processor and a memory operatively coupled to the memory. The memory can include, for example, code representing instructions to be executed by the at least one processor 142 to cause the processor to execute the process of creating a platform-agnostic mobile application configuration data structure 300. Furthermore, the server can be operatively coupled to a network, and in communication with a content management builder such as the content management builder 104 and a user mobile device such as the user mobile device 102 shown and described with respect to FIG. 1.

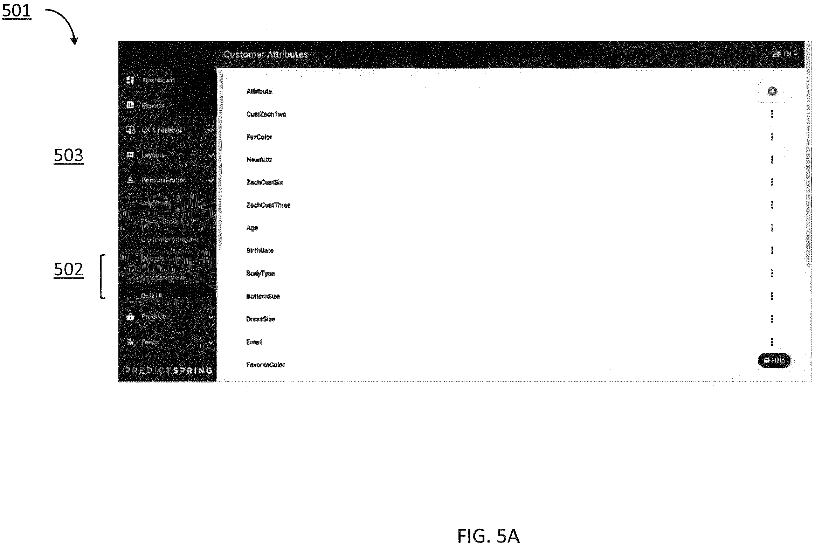

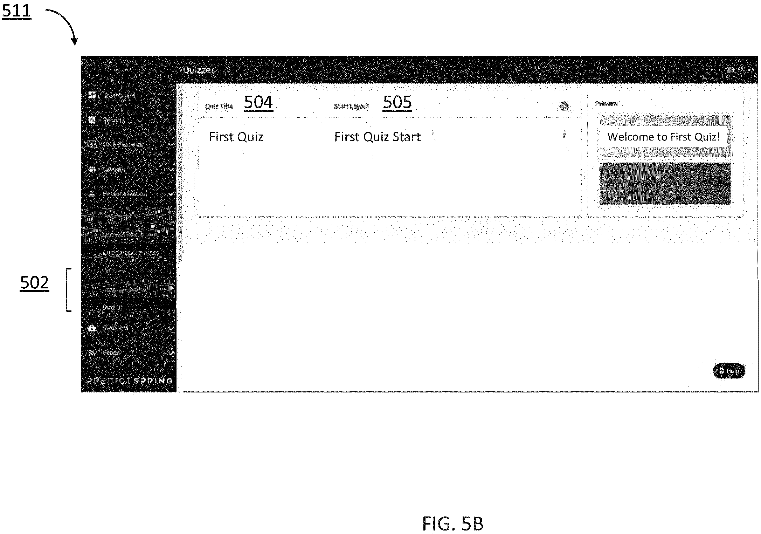

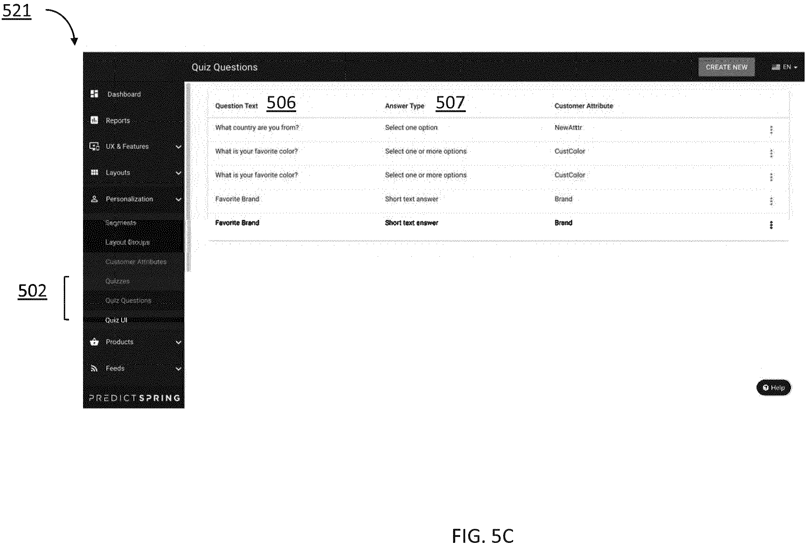

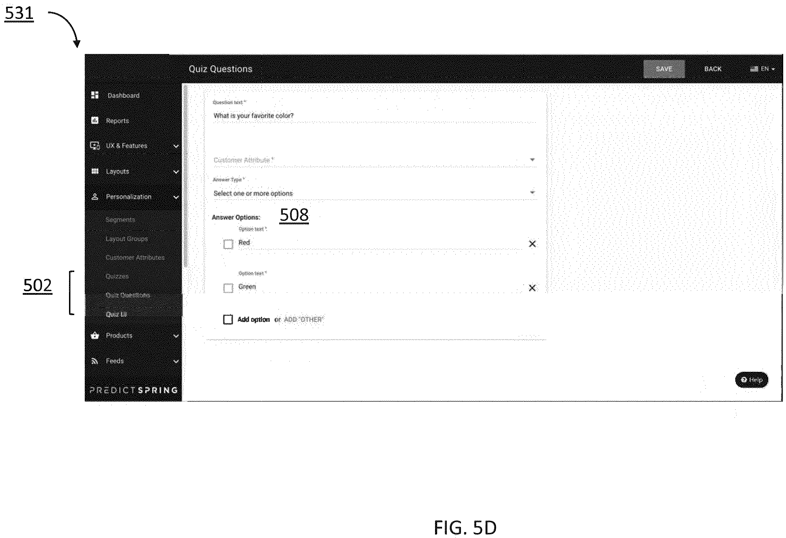

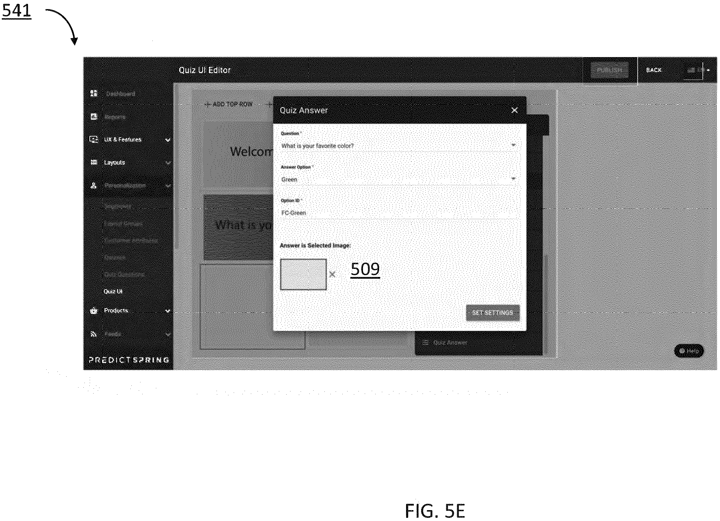

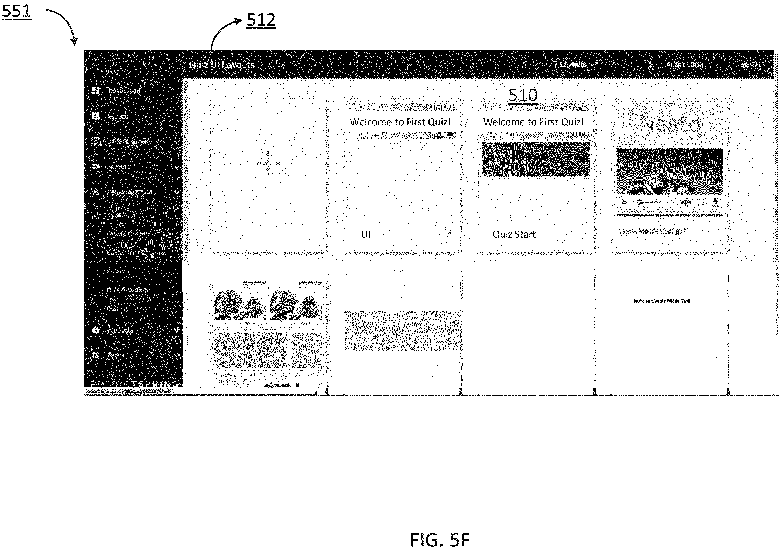

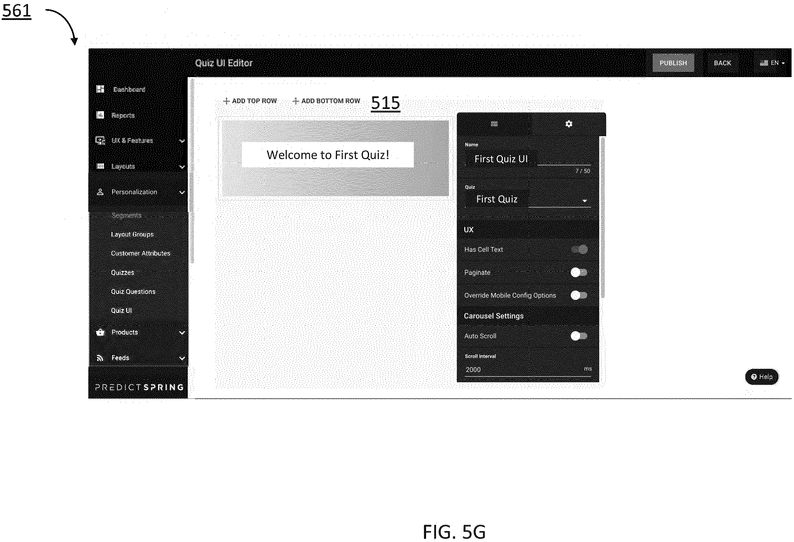

At 302, the method includes sending a signal to a compute device. The signal includes a software package of a dynamic form builder (e.g., dynamic form builder 126 in FIG. 1) that when installed and executed, a first graphical user interface (GUI) can be rendered at the compute device. The compute device can be a content management builder 104 as shown in FIG. 1. The compute device can be associated with a client (e.g., a merchant, a health care service provider, a travel agent, and/or other third-parties.) FIGS. 5A-5G show exemplary screenshots of the first graphical user interfaces 501-561 that is rendered when the dynamic form builder is executed by the content management builder 104, according to an embodiment. The dynamic form builder (e.g., dynamic form builder 126 in FIG. 1) can allow a developer to define, modify, update, and/or customize a quiz (including a set of questions and a set of answer choices corresponding to the set of questions), or use a drag-and-drop section and/or image object feature blocks, and/or a similar graphical programming interface to define an application layout. The dynamic form builder (e.g., dynamic form builder 126 in FIG. 1) can allow a developer to select the options related to the quiz 502 and/or the layouts 503 to design a dynamic form in an application associated with the client and rendered at the user mobile device 102. Under the quizzes tab 502, the dynamic form builder (e.g., dynamic form builder 126 in FIG. 1) can allow a developer to define a quiz title 504, a start layout of the quiz 505, a set of questions 506, a set of answer type for each question 507. Each question from the set of questions 506 can be a text-based question, an image-based question, an audio-based question, or a video-based question, and/or other multi-media question. For each question from the set of questions, the dynamic form builder (e.g., dynamic form builder 126 in FIG. 1) can allow a developer to provide answer options 508 and an answer type 509. In addition, the dynamic form builder (e.g., dynamic form builder 126 in FIG. 1) can allow a developer to select options to be included in the quiz layout, including adding rows and columns 510, 515, editing global layout information (e.g., the name of the layout, the tab for which the layout belongs, and/or other such features), and/or toggling feature flags and/or editing layout settings. Editing via the first graphical user interfaces 501-561 (e.g., dragging and editing various features) in the content management builder 104 can affect the mobile configuration file being created (or defined) by content management server 106. The developer can also copy portions of previously-created quizzes, layouts, and/or complete layouts into the content management builder 104 to incorporate into a new mobile application quiz, layout, and/or can save mobile application quiz and layouts.

Returning to FIG. 3, at 304, the method includes receiving, from the compute device (e.g., the content management builder 104) and via the first graphical user interface 501-561, a set of inputs associated with a set of questions and a set of layout settings. The set of inputs is provided by the developer of the client when the developer defines, modifies, updates, and/or customizes the quiz (including a set of questions and a set of answer choices corresponding to the set of questions), or uses the drag-and-drop section and/or image object feature blocks, and/or a similar graphical programming interface to define the application layout.

At 306, the method includes generating, based on the set of inputs (the input options, the drag-and-drop activity, and/or other selections and/or edits through the content management builder 104), a platform-agnostic configuration application data structure 134a (or a mobile configuration file 110 in FIG. 2). The platform-agnostic configuration application data structure 134a (or a mobile configuration file 110 in FIG. 2) includes platform-agnostic mobile application quiz data associated with the set of questions and platform-agnostic mobile application layout settings data associated with the set of layout settings. The content management server 106 can use the set of inputs to generate the platform-agnostic mobile application quiz data associated with the set of questions and platform-agnostic mobile application layout settings data associated with the set of layout settings. The content management server 106 can generate the platform-agnostic configuration application data structure 134a (or a mobile configuration file 110 in FIG. 2) by creating a data structure in memory including particular quiz variables and layout variables, and updating value for each of the variables as the developer defines and/or specifies quiz data and layout settings. The data structures can be stored in the CMS database 134. In some implementations, the content management server 106 can generate the platform-agnostic configuration application data structure from a codebase associated with the set of inputs.

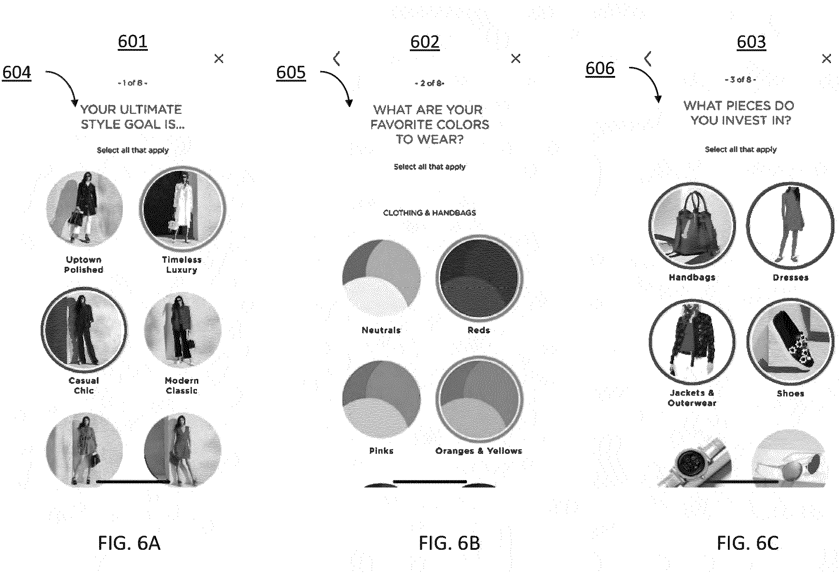

At 308, the method includes sending the platform-agnostic configuration application data structure (or the mobile configuration file 134a) to an application on a mobile device 102. The mobile device 102 can render, based on the platform-agnostic configuration, a second graphical user interface on a display of the mobile device 102. FIGS 6A-6C show exemplary screenshots of the second graphical user interface at the mobile device 102, according to an embodiment. In some implementations, the second graphical user interface 601-603 including a dynamic form 604-606 configured to receive at least one response to a question from the set of questions. A user operating the mobile device 102 can provide inputs, via the second graphical user interface, such as the at least one response to the question in the dynamic form, and the mobile device 102 can send the responses to the content management server 106.

Upon receiving the responses that the user provides to the quiz questions via the dynamic form, the content management server 106 can provide personalized experience to the user when using the mobile application 108. For example, when the user's response to the quiz question of "What is Your Favorite Color to Wear?" is "Green," the content management server 106 can recommend, at the mobile application 108, more products sold by the client that are in the color of green.

In some implementations, the content management server 106 can define an executable JSON and/or similar mobile configuration executable object 146 based on the platform-agnostic configuration application data structure (or the mobile configuration file 134a) and send the mobile configuration executable object 146 to the mobile device 102. The mobile application 108 can execute the mobile configuration executable object 146 when the mobile application 108 accesses the platform-agnostic configuration application data structure (or the mobile configuration file 110.) The content management server 106 can store the platform-agnostic configuration application data structure (or the mobile configuration file 134a) in the CMS database 134, and can send a copy of the mobile configuration file (e.g., the mobile configuration file 110 or 120 in FIG. 1) to the mobile device 102 and/or the content management builder 104. In some implementations, the platform-agnostic configuration application data structure (or the mobile configuration file 134a) are not previously compiled into a machine language program.

In some implementations, the content management server 106 can distribute the mobile configuration file to the mobile device 102 in one of several ways. For example, when the content management server 106 (or the content management builder 104) publishes the mobile application 108 (and/or submits the mobile application 108 to be approved by a mobile application publisher), the content management server 106 can send the defined mobile configuration file with an application installation file to users and/or to the mobile application publisher (e.g., for publisher approval). The content management server 106 can define the application installation file, which may include the mobile application 108. The mobile application 108 can then use the mobile configuration file to determine how to render portions of the mobile application 108 (e.g., FIGS. 6A-6C).

In other implementations, the content management server 106 can send the application installation file, mobile configuration file, and/or other information to the content management builder 104, such that the content management builder 104 can automatically (without human intervention) submit the mobile application and mobile configuration file to a mobile application publisher for approval. In some implementations, the content management server 106 (or the content management builder 104) can submit the mobile configuration file for the initial approval of the application, and can send the mobile configuration file directly to users after subsequent updates to the mobile configuration file without submitting the updated mobile application for approval; in other implementations, the mobile configuration file itself can be excluded from the package provided to the mobile application publisher for approval, and the content management server 106 (or the content management builder 104) can send the mobile configuration file directly to users who install the mobile application 108, e.g., at the time of installation, and/or at another time, and without submitting the updated mobile application for approval.

In some implementations, the mobile application 108 on the mobile device 102 is a native application specific to the client. For example, if the client is a brand-name merchant, the mobile application 108 is an application for the brand-name merchant. Thus, a developer for the client can design the quiz and layout via simple editing tools and drag/drop tools at the first graphical user interface and the content management server 106 can create a native mobile application 108 specific to the client. The native mobile application 108 includes the dynamic form in which the user can respond to the quiz questions, thus having a personalized experience with the client. The developer for the client does not need to write any code or any client-specific code for the mobile application, which greatly reduces the cost and time of creating a native application for the client. In addition, when the client wants to update any quiz questions or the layouts of the mobile application, the client does not need to hire a programmer to write any client-specific code of the mobile application to facilitate such a change. Moreover, any updates to the quiz questions and/or the layouts of the mobile application can be automatically (without human intervention) incorporated into the platform-agnostic configuration application data structure, which is sent to the mobile device 102 by the content management server 106. Thus, these updates to the mobile application do not need to be submitted to a mobile application publisher for review, which can save additional cost and time to the client.

In some implementations, the content management builder 104 can allow a developer to edit previously-defined quiz and/or mobile application layouts using the dynamic form builder 126, and receive, via the first graphical user interface, a updated set of inputs associated with a updated set of questions (and/or layouts). The content management builder 104 can send the updated set of inputs to the content management server 106, which can generate modified platform-agnostic configuration application data structure. The content management server 106 can send the modified platform-agnostic configuration application data structure to the mobile device 102. The mobile device 102 to render the second graphical user interface with an updated dynamic form associated with the updated set of questions based on the modified platform-agnostic configuration application data structure. The user to the mobile device 102 can provide, via the updated dynamic form on the second graphical user interface, a response to a question from the updated set of questions, and mobile device 102 can send the response to the content management server 106. In some implementations, rendering the second graphical user interface with the updated dynamic form occurs without altering code of a mobile application installation file implementing the mobile application 108 and without downloading a new application on the mobile device 102.

In some implementations, the platform-agnostic mobile application layout settings data include a first layout settings data generated based on predefined content (defined by a developer via the content management builder 104) and a second layout settings data generated based on a machine learning algorithm. The machine learning algorithm can be based on personalized data of the user and can allow learning new personalized behavior or interests of the user such that the client can provide personalized service (or products) to the user. The second graphical user interface on the display of the mobile device 102 can then be generated with a first segment based on the first layout settings data and a second segment based on the second layout settings data. The first segment can include the dynamic form, and the second segment can include a personalized dynamic form generated based on personal data of a user of the mobile device 102. The content management server 106 can generate the second layout settings data by accessing, from the CMS database 134, information related to a user of the mobile device 102 and implementing the machine learning algorithm based on the information related to the user.

FIG. 4 is a flow chart illustrating a process of creating a platform-agnostic mobile application configuration data structure 400, according to an embodiment. The mobile application creation process 400 can be executed at, for example, a processor at a server (or other compute device) such as the processor 128 at the content management builder 104 shown and described with respect to FIG. 1. The server (or other compute device) can include, for example, a processor and a memory operatively coupled to the memory. The memory can include, for example, code representing instructions to be executed by the at least one processor 128 to cause the processor to execute process of creating a platform-agnostic mobile application configuration data structure 400. Furthermore, the server can be operatively coupled to a network, and in communication with a content management builder such as the content management builder 104 and a user mobile device such as the user mobile device 102 shown and described with respect to FIG. 1.

At 402, the method includes executing the dynamic form builder (e.g., dynamic form builder 126 in FIG. 1) to render a first graphical user interface at a compute device (e.g., the content management builder 104). At 404, the method includes receiving, via the first graphical user interface (e.g., 501-561 in FIGS. 5A-5G), a set of inputs associated with a set of questions (e.g., 506 in FIGS. 5A-5G) and a set of layout settings (e.g., 512 in FIGS. 5A-5G). The set of inputs is provided by the developer of the client when the developer defines, modifies, updates, and/or customizes the quiz (including a set of questions and a set of answer choices corresponding to the set of questions), or uses the drag-and-drop section and/or image object feature blocks, and/or a similar graphical programming interface to define the application layout.

At 406, the method includes sending the set of inputs to a server causing the server to generate a platform-agnostic configuration application data structure for a mobile application on a mobile device. The first graphical user interface allows a developer to send the set of inputs to a server (e.g., a content management server 106 in FIG. 1) and the server generates a platform-agnostic configuration application data structure (or a mobile configuration file 134a in FIG. 1., or 110 in FIG. 2). The platform-agnostic configuration application data structure includes platform-agnostic mobile application quiz data associated with the plurality of questions and platform-agnostic mobile application layout settings data associated with the set of layout settings. The content management server 106 can generate the platform-agnostic configuration application data structure (or a mobile configuration file 134a in FIG. 1, or 110 in FIG. 2) by defining a data structure in memory including particular quiz variables and layout variables, and updating value for each of the variables as the developer defines and/or specifies quiz data and layout settings. The data structures can be stored in the CMS database 134. In some implementations, the content management server 106 can generate the platform-agnostic configuration application data structure from a codebase associated with the set of inputs.

The platform-agnostic configuration application data structure (e.g., 110 in FIG. 2), when received at the mobile device 102, is configured to render, on a display on the mobile device 102, a second graphical user interface (e.g., 601-603 in FIGS. 6A-6C) based on the platform-agnostic configuration application data structure (or a mobile configuration file 134a in FIG. 1., or 110 in FIG. 2.) The second graphical user interface (e.g., 601-603 in FIGS. 6A-6C) includes a dynamic quiz (e.g., 604-606 in FIGS. 6A-6C) for a user of the mobile device 102.

In some implementations, the content management builder 104 can receive, via the first graphical user interface, a updated set of inputs associated with a updated set of questions and a updated set of layout settings. The content management builder 104 can send the updated set of inputs to the content management server 106, causing the content management server 106 to generate a updated platform-agnostic configuration application data structure for the mobile application 108 on the mobile device 102. The updated platform-agnostic configuration application data structure includes updated platform-agnostic mobile application quiz data associated with the updated set of questions, and updated platform-agnostic mobile application layout settings data associated with the updated set of layout settings. The platform-agnostic configuration application data structure, when received at the mobile device 102, can trigger the rendering of a updated dynamic quiz to the user via the second graphical user interface on the display of the mobile device 102. In some implementations, the platform-agnostic configuration application data structure can automatically (without human intervention) update the dynamic quiz based on an update to at least one question in the set of questions.

Although various embodiments have been described as having particular features and/or combinations of components, other embodiments are possible having a combination of any features and/or components from any of embodiments as discussed above.

Some embodiments described herein relate to a computer storage product with a non-transitory computer-readable medium (also can be referred to as a non-transitory processor-readable medium) having instructions or computer code thereon for performing various computer-implemented operations. The computer-readable medium (or processor-readable medium) is non-transitory in the sense that it does not include transitory propagating signals per se (e.g., a propagating electromagnetic wave carrying information on a transmission medium such as space or a cable). The media and computer code (also can be referred to as code) may be those designed and constructed for the specific purpose or purposes. Examples of non-transitory computer-readable media include, but are not limited to, magnetic storage media such as hard disks, floppy disks, and magnetic tape; optical storage media such as Compact Disc/Digital Video Discs (CD/DVDs), Compact Disc-Read Only Memories (CD-ROMs), and holographic devices; magneto-optical storage media such as optical disks; carrier wave signal processing modules; and hardware devices that are specially configured to store and execute program code, such as Application-Specific Integrated Circuits (ASICs), Programmable Logic Devices (PLDs), Read-Only Memory (ROM) and Random-Access Memory (RAM) devices. Other embodiments described herein relate to a computer program product, which can include, for example, the instructions and/or computer code discussed herein.

Some embodiments and/or methods described herein can be performed by software (executed on hardware), hardware, or a combination thereof. Hardware modules may include, for example, a general-purpose processor, a field programmable gate array (FPGA), and/or an application specific integrated circuit (ASIC). Software modules (executed on hardware) can be expressed in a variety of software languages (e.g., computer code), including C, C++, Java™, Ruby, Visual Basic™, and/or other object-oriented, procedural, or other programming language and development tools. Examples of computer code include, but are not limited to, micro-code or micro-instructions, machine instructions, such as produced by a compiler, code used to produce a web service, and files containing higher-level instructions that are executed by a computer using an interpreter. For example, embodiments may be implemented using imperative programming languages (e.g., C, Fortran, etc.), functional programming languages (Haskell, Erlang, etc.), logical programming languages (e.g., Prolog), object-oriented programming languages (e.g., Java, C++, etc.) or other suitable programming languages and/or development tools. Additional examples of computer code include, but are not limited to, control signals, encrypted code, and compressed code.

## Claims

1. A non-transitory processor-readable medium storing code representing instructions to be executed by a processor, the code comprising code to cause the process to:
send a signal to a compute device such that a first graphical user interface is rendered at the compute device via a dynamic form builder;
receive, via the first graphical user interface, a plurality of inputs associated with a plurality of questions and a set of layout settings;
generate, based on the plurality of inputs, a platform-agnostic configuration application data structure, the platform-agnostic configuration application data structure including (1) platform-agnostic mobile application quiz data associated with the plurality of questions, and (2) platform-agnostic mobile application layout settings data associated with the set of layout settings; and
send the platform-agnostic configuration application data structure to an application on a mobile device, causing the mobile device to render a second graphical user interface on a display of the mobile device based on the platform-agnostic mobile application quiz data and the platform-agnostic mobile application layout settings data, the second graphical user interface including a dynamic form configured to receive at least one response to a question from the plurality of questions.

2. The non-transitory processor-readable medium of claim 1, wherein the application on the mobile device is a native application.

3. The non-transitory processor-readable medium of claim 1 or claim 2, further comprising code to cause the processor to:
receive, via the second graphical user interface, the at least one response to the question in the dynamic form from a user of the mobile device.

4. The non-transitory processor-readable medium of any of the preceding claims, further comprising code to cause the processor to:
receive, via the first graphical user interface, a updated plurality of inputs associated with a updated plurality of questions;
modify, based on the updated plurality of inputs, the platform-agnostic configuration application data structure to generate modified platform-agnostic configuration application data structure; and
send the modified platform-agnostic configuration application data structure to the mobile device, causing the mobile device to render the second graphical user interface with an updated dynamic form associated with the updated plurality of questions based on the modified platform-agnostic configuration application data structure.

5. The non-transitory processor-readable medium of claim 4, further comprising code to cause the processor to:
receive, via the updated dynamic form on the second graphical user interface, a response to a question from the updated plurality of questions from a user of the mobile device.

6. The non-transitory processor-readable medium of claim 4 or claim 5, wherein rendering the second graphical user interface with the updated dynamic form occurs without altering code of a mobile application installation file implementing the application and without downloading a new application on the mobile device.

7. The non-transitory processor-readable medium of any of the preceding claims, further comprising code to cause the processor to receive the plurality of inputs from a third party

8. The non-transitory processor-readable medium of any of the preceding claims, wherein:
the platform-agnostic mobile application layout settings data includes a first layout settings data generated based on predefined content and a second layout settings data generated based on a machine learning algorithm.

9. The non-transitory processor-readable medium of claim 8, wherein platform-agnostic configuration application data structure causes the mobile device to render the second graphical user interface on the display of the mobile device with a first segment and a second segment, the first segment being based on the first layout settings data, and the second segment being based on the second layout settings data.

10. The non-transitory processor-readable medium of claim 9, wherein the first segment includes the dynamic form.

11. The non-transitory processor-readable medium of claim 9 or claim 10, wherein the second segment includes a personalized dynamic form generated based on personal data of a user of the mobile device.

12. The non-transitory processor-readable medium of any of claims 9 to 11, further comprising code to cause the processor to:
generate the second layout settings data by (1) accessing, from a database, information related to a user of the mobile device, and (2) implementing the machine learning algorithm based on the information related to the user.

13. The non-transitory processor-readable medium of any of the preceding claims, wherein the dynamic form includes at least one of a text-based question, an image-based question, an audio-based question, or a video-based question.

14. The non-transitory processor-readable medium of any of the preceding claims, further comprising code to cause the processor to:
generate an executable object based on the platform-agnostic configuration application data structure, the platform-agnostic configuration application data structure not being previously compiled into a machine language program; and
send the executable object to the application on the mobile device, causing the mobile device to execute the executable object to render the second graphical user interface based on the platform-agnostic configuration application data structure.

15. An apparatus, comprising:
a memory; and
a processor operatively coupled to the memory, the processor configured to:
send a signal to a compute device such that a first graphical user interface is rendered at the compute device via a dynamic form builder,
receive, via the first graphical user interface, a plurality of inputs associated with a plurality of questions and a set of layout settings,
generate, based on the plurality of inputs, a platform-agnostic configuration application data structure, the platform-agnostic configuration application data structure including (1) platform-agnostic mobile application quiz data associated with the plurality of questions, and (2) platform-agnostic mobile application layout settings data associated with the set of layout settings, and
send the platform-agnostic configuration application data structure to an application on a mobile device, causing the mobile device to render a second graphical user interface on a display of the mobile device based on the platform-agnostic mobile application quiz data and the platform-agnostic mobile application layout settings data, the second graphical user interface including a dynamic form configured to receive at least one response to a question from the plurality of questions.
